# EUROPEAN PATENT APPLICATION

(11) **EP 1 946 880 A1**
(43) Date of publication of application: **23.07.2008**
(21) Application number: 07001094.7
(22) Date of filing: 19.01.2007
(51) Int. Cl.: B23K 26/32, B23K 35/38, B23K 26/12

(54) **Protective gas for laser welding and method for laser welding**

(71) Applicant: Air Liquide Deutschland GmbH, 40235 Düsseldorf (DE)
(72) Inventor: Kaya, Cerkez, 47804 Krefeld (DE)
(74) Representative: Kahlhöfer, Hermann

(57) **Abstract**

The invention deals with a protective gas for laser welding comprising :
- 95 to 98 % of an inert gas and
- 2 to 5 % oxygen (O₂),
the fractions of the inert gas and oxygen summing up to at least 99.9%, the remainder being impurities.

The protective gas according to the present invention improves advantageously the transfer of energy into the welded region (3) so that small flank angles (6) can be achieved. The drawback of laser welding using at least one laser diode as energy source resulting in comparably small welding powers can such be overcome by using a protective gas according to the present invention. The protective gas according to the present invention can be used for laser welding at least one workpiece (1, 2) made of chromium nickel steel.

## Description

The present invention relates to a protective gas for laser welding and a method for laser welding workpieces made of steel. In particular, the protective gas and the respective method for laser welding are useful for laser welding processes wherein a laser diode is the source of the laser beam.

When laser welding, the effects of inert protective gases, oxidizing protective gases or reducing protective gases are known. Protective gases are used for protecting the welding seam from oxidation. Furthermore, protective gases influence the plasma which is induced by the use of the laser beam so that the protective gas influences the introduction of power from the laser energy into the surface of the workpiece and consequently, e. g., the depth of the welding seam.

Laser diodes are known as a source for the laser beam for welding. These laser diodes have lower energy densities compared to usual laser sources like Nd:YAG-lasers and consequently produce lower temperatures, which leads to smaller depths of the welding seam. Known laser welding processes carried out with low energy produce relatively wiede opened seam flanks and a relatively big heat affected zone.

Based on this, it is an object of the present invention to overcome problems arising from prior art and in particular to provide a method for laser welding workpieces with low energy densities in which a reasonable depth of the welding seam is accomplished and to provide a respective protection gas which allows such a welding process.

These objects are accomplished by a protective gas and a method for laser welding having the features of the independent claims. The respective dependent claims are directed to improvements of the method or the protective gas.

The protective gas for laser welding according to the invention comprises components:
- 95 to 98% of an inert gas and
- 2 to 5% oxygen (O₂),
the fractions of the inert gas and oxygen summing up to at least 99.9%, the remainder being impurities..

According to an improvement of the present invention the protective gas comprises the following components:
- 96.5% to 98% of the inert gas and
- 2% to 3.5% oxygen (O₂).

The portions or fractions given within this document in percent are - unless otherwise disclosed - volume percent at a temperature of 20°C and a pressure of 1 bar.

The protective gas according to the present invention allows the welding of workpieces made of steel in which, e. g., a laser diode is used as source for the laser beam for welding. Because of the lower energy densities and consequently the lower temperature, thermal conductivity effects and plasma generation induced by the protective gas can be disregarded. The protective gas according to the invention allows the homogeneous dissipation of heat generated by the laser beam over the welding seam cross section, so that a ratio of seam depth to seam width of the welding seam of larger than one can be reached.

The protective gas according to the present invention is in particular advantageous for laser welding of chromium-nickel-steels. Within this document it is understood that a chromium-nickel-steel comprises iron as a basis and chromium and nickel as further components. Iron is alloyed with 10 to 30 weight percent (wt. %) chromium, 0.01 to 2 wt. % carbon and up to 18 wt. % nickel.

During experiments performed by the applicant the following protective gas has been found to be advantageous: 97% of at least one inert gas and 3% oxygen (O₂).

It was found to be particular effective if the protective gas comprised 47% Argon and/or Helium, 50% nitrogen and 3 % oxygen as well as impurities. During the experiments two workpieces made of 1.4301 (X 5 CrNi 18-10) according to EN 10027 was laser welded using a laser diode ROFIN SINAR DL 028Q, provided by Rofin Sinar, Hambrug, Germany, as source for the laser beam. The intensity of the laser beam was 70 kW/cm² (Kilowatt per square centimetre). The laser diode had a power of 2500 W (Watt). The feed of the welding process was performed at a feed rate of 2.2 m/min, the protective gas was provided at a feed of 15 1/min (litre per minute). This resulted in a welding seam which covered the whole thickness of the workpiece of 2.0 mm (millimetres).

According to a further improvement of the present invention, the protective gas comprises at least one inert gas which comprises at least in part one of the following gases:
a) nitrogen (N₂);
b) argon (Ar);
c) helium (He).

In particular a protective gas comprising an inert gas of 50 % nitrogen (N₂) and 47 % Argon is advantageous for laser welding when a laser diode is used as the source for the at least one laser beam.

According to a further aspect of the present invention a method for laser welding a workpiece made of metal is provided, wherein at least one laser beam is used for welding, wherein a protective gas according to the present invention is used.

In particular a protective gas comprising 95 to 97% of at least one inert gas and 3 to 5 % oxygen is found to be advantageous.

According to an improvement of the method according to the invention at least one laser diode is used as a source for the laser beam.

Laser diodes are freely available on the market and provide a cheap possibility for a source for laser energy used for welding. When a protective gas according to the present invention is used favourable results can be reached when welding workpieces in particular made of chromium-nickel-steel.

In particular a metal comprising 10 to 30 wt. % chromium can advantageously be welded using the method according to the present invention. In particular a chromium-nickel-steel comprising 18 wt. % chromium and 10 wt. % nickel in a basis of iron is advantageous and can be welded using a protective gas according to the present invention, in particular if a laser diode as a source for the at least one laser beam is used.

According to a further improvement of the method according to the present invention at least one laser beam having a wave length of 800 to 980 nm (nanometres) is used.

According to a further improvement of the method according to the present invention laser light of a power of 500 W to 6000 W (Watt) is used. In this context, laser light sources having a power of 2000 to 3000 W, in particular of 2200 to 2800 W have been found to be advantageous.

According to a further improvement of the method according to the present invention, at least one laser beam having an intensity of 10 to 1000 kW/cm² (kilowatt per square centimetre) is used.

Particularly, a laser beam intensity of 500 to 900 kW/cm², preferably of 600 to 800 kW/cm² can be used.

According to a further improvement of the method according to the present invention at least one laser beam having a focus of at most 4 mm² (square millimetres) is used.

Laser beams with a focus of 3.6 mm² or less than 3 mm² or even less than 2 mm² can be used for laser welding according to the present invention.

A welding process wherein at least one laser beam having a wave length as disclosed above, an intensity as disclosed above and/or a focus as disclosed above can be used advantageously with the protective gas according to the invention. The protective gas according to the invention improves the energy transfer from the laser beam to the workpiece so that the production of welding seams having a well balanced seam depth to seam width ratio and in particular flank angles of the welding seam of 0° can be reached. The material to be welded is preferably fed at a feed rate of 1.0 to 3.2 m/min (metre per minute). In a particularly advantageous improvement of the method according to the present invention the protective gas is provided at a feed of 10 to 151/min (litre per minute).

According to a further improvement of the method according to the present invention a welding seam created by the welding process extends into a depth up to 2 mm (millimetres).

The protective gas according to the present invention and the method for laser welding according to the present invention allow the generation of well balanced welding seams even if intermediate intensities of the laser beam are used, which is e.g. the case if laser diodes are used as the source for the at least one laser beam for laser welding. For such low intensities the protective gas according to the present invention allows a very favourable result with welding seam flank angels of less than 10°, preferably less than 5°.

The invention is in the following further described by way of example with reference to the accompanying drawings in which:
- Fig. 1:: schematically shows a welding seam welded with a protective gas known from prior art; and
- Fig. 2:: schematically displays a welding seam welded according to the invention.

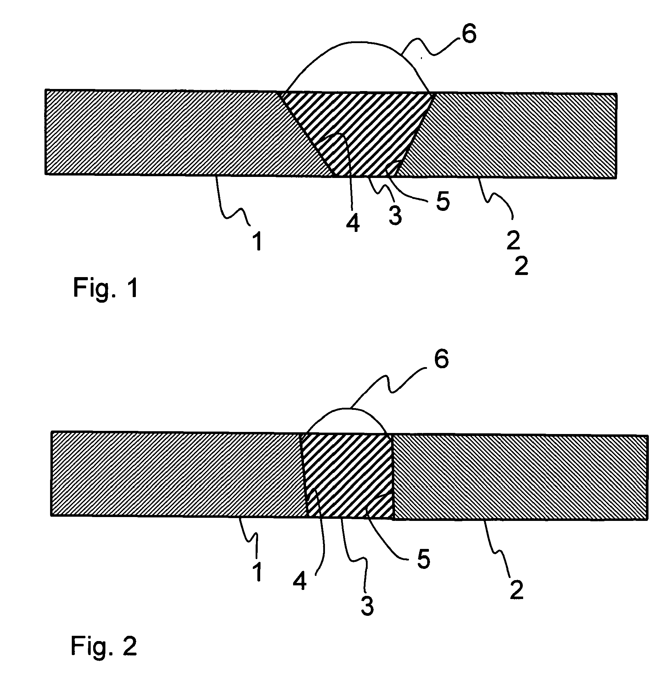

Both Figs. 1 and 2 display a cross section of a welding seam connecting a first workpiece 1 and a second workpiece 2 in a welded region 3. This welded region 3 is limited from workpieces 1, 2 by a first border line 4 and a second border line 5. The flank angle 6 is the angle between the border lines 4, 5.

The example in Fig. 1 is welded using prior art protective gases like e. g. pure argon. The flank angle 6 is round about 50°. The example in Fig. 2 is welded using the inventive concept with a protective gas consisting of 88% Argon and 12% oxygen. The flank angle 6 is nearly 0°. When laser-welding according to the present invention flank angles 6 of less than 25°, in particular less than 10°, or even less than 5° or less than 0° and width-to-depth ratios of the welded region 3 of less than one (1) can be achieved.

Furthermore a method for providing welding seam connections by laser welding using laser diodes as energy source , wherein said welding seam has a flank angle of less than 10°, preferably less than 5°, wherein a protective gas according to the present invention is used is useful. The improvements described here for the method for laser welding can advantageously be transferred to and used with this method for providing welding seam connections as well.

The protective gas according to the present invention improves advantageously the transfer of energy into the welded region 3 so that small flank angles 6 can be achieved. The drawback of laser welding using at least one laser diode as energy source resulting in comparably small welding powers can such be overcome by using a protective gas according to the present invention. The protective gas according to the present invention can be used for laser welding at least one workpiece 1, 2 made of chromium nickel steel.

### List of reference numerals

- 1: first workpiece
- 2: second workpiece
- 3: welded region
- 4: first border line
- 5: second border line
- 6: flank angle

## Claims

1. Protective gas for laser welding comprising :
- 95 to 98 % of an inert gas and
- 2 to 5 % oxygen (O₂),
the fractions of the inert gas and oxygen summing up to at least 99.9%, the remainder being impurities.

2. Protective gas according to claim 1, comprising:
- 96.5 % to 98 % of the inert gas and
- 2 % to 3.5 % oxygen (O₂).

3. Protective gas according to claim 1 or 2, comprising
- 50 % nitrogen (N₂) and
- 47 % argon (Ar).

4. Method for laser welding at least one work piece made of metal, wherein at least one laser beam is used for welding, **characterized in that** a protective gas according to one of the preceding claims is used.

5. Method according to claim 4, wherein at least one laser diode is used as a source for the laser beam.

6. Method according to one of claims 4 or 5, wherein the metal comprises chromium-nickel steel.

7. Method according to one of claims 4 to 6, wherein the metal comprises 10 to 30 wt. % (weight-%) chromium (Cr).

8. Method according to one of claims 4 to 7, wherein at least one laser beam having a wave length of 800 to 980 nm (nanometre) is used.

9. Method according to one of claims 4 to 8, wherein laser light of a power of 500 W to 6000 W (Watt) is used.

10. Method according to one of claims 4 to 9, wherein at least one laser beam having an intensity of 10 to 1000 kW/cm² (Kilowatt per square centimetre) is used.

11. Method according to one of claims 4 to 10, wherein at least one laser beam having a focus of at most 4 mm² (square millimetres) is used.

12. Method according to one of claims 4 to 11, wherein the welding process is performed at a feed rate of 1.0 to 3.2 m/min (metre per minute).

13. Method according to one of claims 4 to 12, wherein the protective gas is provided at a feed of 10 to 151/min (litre per minute).

14. Method according to one of claims 4 to 13, wherein the welding seam created by the welding process extends into a depth of up to 2 mm (millimetres).
